# EUROPÄISCHE PATENTSCHRIFT

(11) **EP 0 396 861 B1**
(45) Veröffentlichungstag und Bekanntmachung des Hinweises auf die Patenterteilung: **27.12.1995**
(21) Anmeldenummer: 90103632.7
(22) Anmeldetag: 24.02.1990
(51) Int. Cl.: G01C 21/00

(54) **Verfahren zur Navigation**
Navigation procedure
Procédé de navigation

(30) Priorität: 12.05.1989 DE 3915633
(43) Veröffentlichungstag der Anmeldung: 14.11.1990
(73) Patentinhaber: DORNIER GmbH, D-88039 Friedrichshafen (DE)
(72) Erfinder: Metzdorff, Walter, Dr., D-7990 Friedrichshafen 24 (DE); Eibert, Max, Dr.-Dipl.-Phys., D-7990 Friedrichshafen 24 (DE); Lux, Peter, Dr. Dipl.-Phys, D-7994 Langenargen (DE)

(56) Entgegenhaltungen:
- EP-A- 0 381 178
- DE-A- 3 110 691
- GB-A- 2 162 014
- IEEE TRANSACTIONS ON AEROSPACE AND ELECTRONICS SYSTEMS, Band AES-15, Nr. 4, Juli 1979, Seiten 547-554; C.G. REED et al.: "Range correlation guidance for cruise missiles"

## Beschreibung

Die Erfindung betrifft ein Verfahren zur Navigation oder zur Navigationsaufdatung für Luftfahrzeuge nach dem Oberbegriff des Anspruchs 1.

Bei solchen Navigationsverfahren wird das vom Luftfahrzeug (Flugzeug, Hubschrauber, Flugkörper) überflogene Gebiet mit einem Sensor abgetastet und mit vorher eingespeicherten Referenzdaten verglichen. Luftfahrzeuge verwenden im allgemeinen mehrere Navigationssysteme.

Ein Verfahren der eingangs genannten Art ist aus der DE-A-31 10 691 bekannt. Demnach wird mit Hilfe eines in einem Flugkörper befindlichen Bodensensors ein Geländestreifen der überflogenen Erdoberfläche aufgenommen. Dazu wird speziell ein Lasersender scharfer Bündelung, dessen Sensorstrahl senkrecht gegen die Erdoberfläche gerichtet ist, sowie ein entsprechender Laserempfänger verwendet. Die empfangenen Signale enthalten Information über die rückgestreute Intensität sowie die Entfernung der abgetasteten Bodenpunkte, d.h. ein Höhenprofil des überflogenen Geländestreifens. In diesem werden die Übergänge zwischen Geländeabschnitten unterschiedlicher Textur ermittelt. Hieraus wird ein Szenenstreifen erstellt, welcher die Abfolge der Übergänge repräsentiert. Dieser Szenenstreifen hat die Form eines Impulszuges, wobei jeder Einzelimpuls einem festgestellten Übergang entspricht. Die aufgelaufenen Impulse eines Impulszuges werden zunächst in einem Zwischenspeicher gespeichert. Hierbei ist wesentlich, daß die Übergänge nicht voneinander unterschieden werden und die entsprechenden Impulse keine Rückschlüsse auf die Art des jeweils vorliegenden Überganges, d.h. auf den Typ der benachbarten Geländeabschnitte ermöglichen. Die Szenenstreifen bzw. Impulszüge sind also insofern völlig undifferenziert. Weiterhin werden bei dem bekannten Verfahren die aus den Sensormessungen abgeleiteten Impulszüge zwar mit Informationen aus dem Referenzspeicher verglichen, jedoch entspricht die Referenzinformation dort mehreren mit Abstand zueinander parallel angeordneten Abtastspuren auf der Erdoberfläche. Diese liegen ebenfalls in Form von Impulszügen vor, deren Einzelimpulse Grauwertübergängen in den abgetasteten Geländespuren entsprechen. Schließlich wird der gemessene Impulszug mit den Referenz-Impulszügen verglichen, und zwar beispielsweise durch relative Quer- und Längsverschiebung.

Das bekannte Verfahren geht also von Übergängen zwischen unterschiedlich texturierten Geländeabschnitten aus, differenziert bei der Auswertung aber nicht mehr zwischen unterschiedlichen Typen von Übergängen. Dies stellt einen Unsicherheitsfaktor beim Vergleich zwischen gemessener und Referenzinformation dar. Außerdem liegt in der Tatsache, daß die den Referenz-Impulszügen entsprechenden Geländespuren jeweils einen Abstand voneinander haben, ein Informationsverlust, da das Gelände durch die Referenzinformation nicht lückenlos erfaßt ist.

In der GB-A-2 162 014 ist ein Flugführungs- und Navigationsverfahren offenbart, bei welchem in einer Verfahrensart das unter dem Fluggerät liegende Gelände zweidimensional oder eindimensional abgetastet wird, wonach dann die entsprechenden Höhendaten einer Korrelation mit vorher gespeicherten Geländedaten gleicher Art unterzogen werden. Dies geschieht Punkt für Punkt, ohne daß Übergänge zwischen Geländeabschnitten unterschiedlicher Textur ermittelt werden. Die zweite Verfahrensart bezieht sich auf die Zielerfassung und Endphasenlenkung, wobei der Sensor nicht mehr nach unten, sondern schräg nach vorne gerichtet ist. Lediglich bei der Zielerfassung (target surveying) werden Höhensprünge oder relevante Zielsignaturen ausgewertet, und die erfaßten Geländedetails (road, tank) werden lediglich zur Korrektur der gespeicherten Referenzdaten bzw. zur Registrierung späterer möglicher Ziele verwendet. Die eigentliche Navigation bzw. Positionsbestimmung des Fluggerätes geschieht stets ausschließlich durch ein- oder zweidimensionale Korrelation der punktweise gemessenen sowie gespeicherten Geländehöhendaten.

Der Erfindung liegt die Aufgabe zugrunde, ein Navigationssystem zu schaffen, bei dem die Positionsbestimmung mit möglichst großer Sicherheit erfolgt.

Diese Aufgabe wird gemäß der Erfindung durch die im kennzeichnenden Teil des Patentanspruchs 1 genannten Merkmale gelöst.

Demnach schlägt die Erfindung vor, die Übergänge in den durch die Sensormessungen ermittelten Szenenstreifen mit einer Kennzeichnung dahingehend zu versehen, zwischen welchen Gelände- bzw. Objekttypen der Übergang stattgefunden hat. Weiterhin wird eine Referenzinformation verwendet, welche die Geländeflächen unterschiedlicher Textur des überflogenen Geländes und damit auch deren Übergänge in zweidimensionaler Darstellung repräsentiert, so daß zumindest hinsichtlich der interessierenden Übergänge keinerlei Informationsverlust auftritt. Das durch den Anmeldungsgegenstand vorgeschlagene Verfahren macht also auf differenziertere Weise von den zugänglichen Informationen Gebrauch und ermöglicht dadurch eine eindeutigere Positionsbestimmung, und zwar mittels Auswertung der Abstände zwischen einander entsprechenden Übergängen im Szenenstreifen einerseits und im Referenzgelände andererseits.

Die beispielsweise mit Hilfe eines Laserradar-Profilmeßsystems als Sensor aufgenommenen Höhenprofile gestatten mit geeigneten, im folgenden näher beschriebenen Auswerteverfahren die Unterscheidung zwischen Wald, bebautem Gebiet und eventuellen Sonderobjekten wie Flüssen. Durch Hinzunahme der Amplitude des reflektierten Signals kann ein weiteres Merkmal für eine Entscheidungshilfe gewonnen werden.

Ist ein entsprechender Szenenstreifen erstellt und, falls nötig, mit Hilfe vermessener Flugzustandsdaten korrigiert, so kann ein Vergleich mit gespeicherten Referenzinformationen erfolgen. Diese Referenz besteht aus der topographischen Information der Erdoberfläche wie beispielsweise Bewuchs oder Bebauung. Diese Information kann aus Karten oder Luftbildern gewonnen und entsprechend abgespeichert werden.

Der Vergleich des vermessenen und entsprechend ausgewerteten Streifens mit der Referenzinformation führt zur Positionsbestimmung und zu einer entsprechenden Aufdatung der Navigationseinheit des Trägers.

Die Erfindung wird anhand von Figuren näher beschrieben.

Es zeigen:
- Figur 1: ein Blockschaltbild eines erfindungsgemäßen Navigationsverfahrens
- Figur 2: das Abtasten beim Überflug
- Figur 3: das abgetastete Profil und einen Szenenstreifen
- Figuren 4 und 5: zwei Verfahren der Positionsbestimmung.

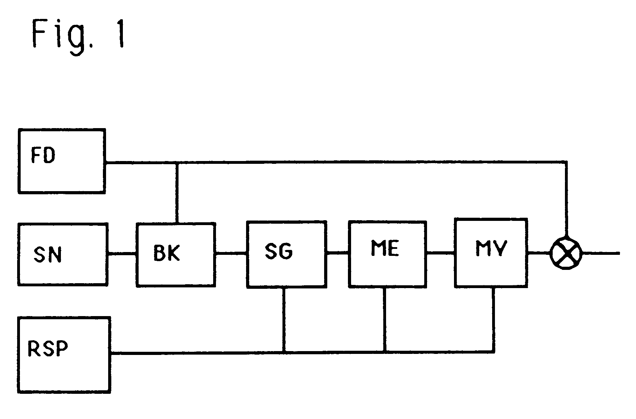

Figur 1 zeigt ein Blockschaltbild eines Geräts, mit dem das erfindungsgemäße Navigationsverfahren durchgeführt werden kann. Erfindungsgemäß sind vorgesehen ein Sensor SN, eine Bildkorrektur BK, in die Flugzustandsdaten FD mit eingehen, eine Segmentierungseinheit SG, eine Merkmalsextraktionseinheit ME und eine Einheit zum Merkmalsvergleich MV mit gespeicherten Referenzdaten (Referenzspeicher RSP).

Die Vorrichtung funktioniert wie folgt:
Der Sensor SN nimmt eine Abbildung des überflogenen Gebietes auf. Die Bildkorrekturschaltung BK korrigiert den Bildstreifen aufgrund der Flugzustandsdaten, die aus dem IN-System (Inertial Navigation) des Flugkörpers respektive Flugzeuges stammen (FD). Bei voll stabilisiertem Sensorsystem wird nur eine Geschwindigkeitskorrektur durchgeführt, bei fest eingebautem System wird die Position am Boden relativ zum Träger berechnet und bei der weiteren Verarbeitung berücksichtigt. Sodann wird eine Segmentierung in SG durchgeführt, wobei beispielsweise Waldstreifen, bebautes Gebiet und die entsprechenden komplementären Streifen identifiziert und durch eine Kennzeichnung wie beispielsweise Waldanfang oder Siedlungsende markiert werden (Merkmalserkennung ME). Eine Vergleichsschaltung MV prüft sodann, ob und in welcher Position die beste Übereinstimmung zwischen Referenz (aus dem Referenzspeicher RSP) und Szene erzielt werden kann.

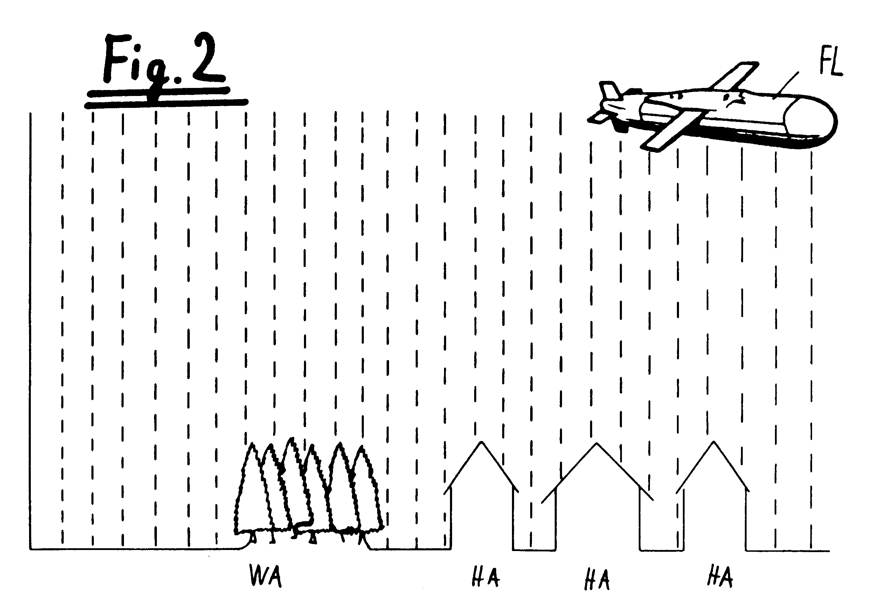

Figur 2 zeigt einen Flugkörper FL, der nach dem erfindungsgemäßen Navigationsverfahren arbeitet. Er besitzt einen Sensor, der ein Profil der überflogenen Landschaft aufnimmt. WA zeigt dabei ein Waldstück im Profil, HA eine Reihe überflogener Häuser.

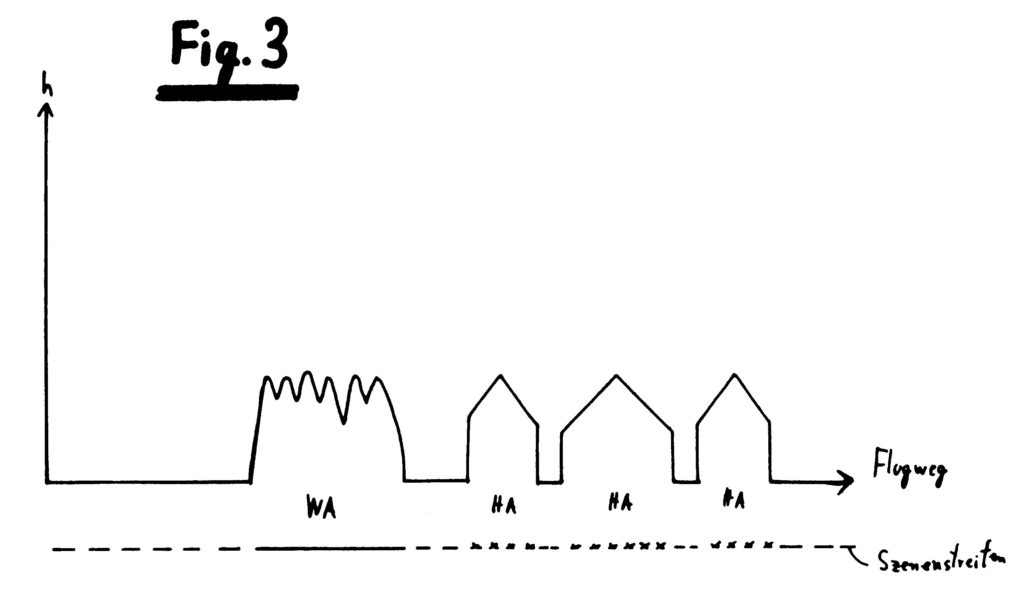

Figur 3 zeigt beispielhaft ein abgebildetes Profil (Höheninformation h über den Flugweg), das sich etwa aus der Meßinformation des Waldes WA und der überflogenen Häuser HA zusammensetzt, wie es der Flugkörper in Figur 2 aufgenommen hat.

Durch Segmentierung und Merkmalserkennung, z.B. über Bestimmung der Textur oder der Neigung der Flächen werden die Objekte erkannt und registriert. So wird z.B. neigungsarmes, texturarmes, weiter entferntes Gelände als Objekt: Feld erkannt (im Szenenstreifen unten gestrichelt gezeichnet). Sich näher befindliches, stark strukturiertes oder texturiertes Gelände wird als Wald erkannt (im Szenenstreifen mit durchgezogener Linie gezeichnet). Gelände mit starken Neigungen wird als Hausdach erkannt (im Szenenstreifen mit Kreuzchen gezeichnet).

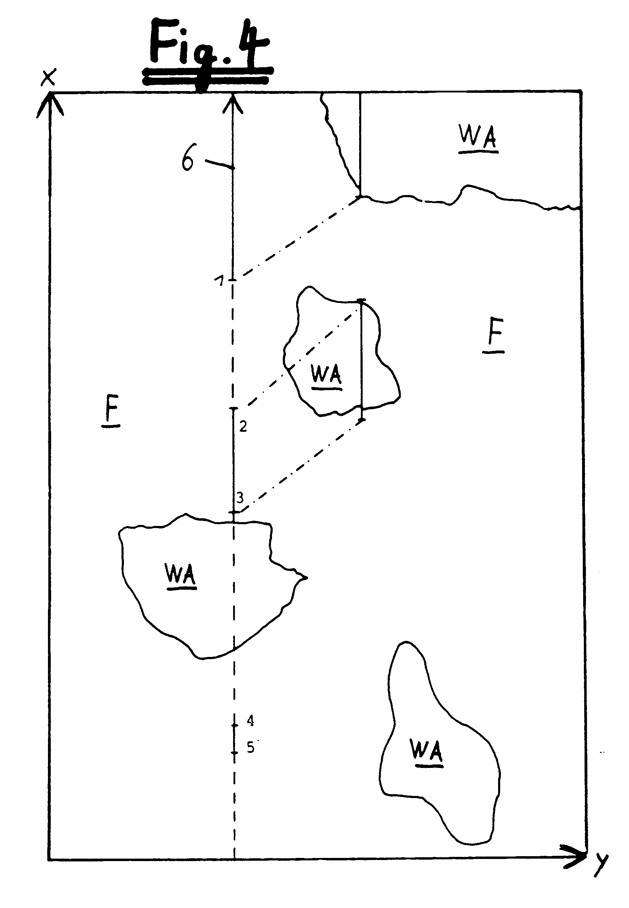

Figur 4 zeigt eine Variante des Vergleichsverfahrens, wie es im Merkmalsvergleicher MV durchgeführt wird. Gezeichnet ist ein Ausschnitt aus einer Landkarte im Draufblick (Koordinate x in Flugrichtung und Koordinate y quer dazu), wie sie im Fluggerät FL gespeichert ist. Die Karte enthält hier Feldfläche F und Waldstücke WA. Weiterhin ist eingezeichnet der Szenenstreifen 6, bei dem die durchgezogen geZeichneten Anteile Wald bedeuten, die gestrichelt gezeichneten Anteile Feld. Der Szenenstreifen 6, der dem Szenenstreifen der Figur 3 unten in etwa entspricht, liegt an der Stelle der Karte, an der das Basisnavigationssystem berechnet hat, daß der Flugkörper FL sein sollte. Der Szenenstreifen 6 besteht aus vermessenen und segmentierten Abschnitten. Der Übersichtlichkeit halber sei nur das Beispiel für Wald/Feld erläutert. Für bebautes Gebiet oder Gebiete ähnlicher Charakterisierung wie Gewässer, Plantagen, Straßen usw. arbeitet das Verfahren analog. Der eingezeichnete Pfeil deutet die Flugrichtung an. Markiert sind weiterhin die Übergänge Wald/Feld (1), Feld/Wald (2), Wald/Feld (3), Feld/Wald (4) und Wald/Feld (5). Wald/Feld wird als eine Kennzeichnung benutzt, Feld/Wald dagegen als eine andere Information. Der Szenenstreifen 6 wird nun probeweise in y-Richtung (quer zur Flugrichtung) und nachfolgend in x-Richtung so lange verschoben (strichpunktiert gezeichnet), bis ein Abstandsmaß zu den entsprechenden Übergängen (also ebenso Feld/Wald respektive Wald/Feld) minimal wird. Als Abstandsmaß kann dabei MAD (Mean Absolute Difference) oder MSD (Mean Square Difference) als quadratische Abweichung benutzt werden. Dieses Verfahren setzt nicht voraus, daß die Szenenstrecke geradlinig verläuft. Da durch das im allgemeinen in Flugzeugen und Flugkörpern vorhandene INS mit einem Rechner für Koppelnavigation die Position der Meßpunkte berechnet wird und diese Systeme eine hohe Kurzzeitgenauigkeit haben, läßt sich die Geschwindigkeit und Position erkennen.

Da ein Kalmanfilter Schätzwerte über die Fehlerterme der Position liefert, können diese Angaben ausgenutzt werden, um den Suchbereich (δₓ, δ_{y}) einzuschränken. Je geringer der Suchbereich, umso eindeutiger ist die Zuordnung der Übergänge auch bei kleinen Szenenstreifen, so daß die Szenenlänge sich im Laufe des Fluges an die Systemgenauigkeit anpassen kann und damit zu höheren Genauigkeiten, kürzeren Reichweiten und geringen Versatz zwischen Zeitpunkt und Ort der Positionsbestimmung und momentanen Ort des Trägers führt. Im Extremfall kann die Differenz zwischen der Position eines erwarteten Übergangs und der des tatsächlich festgestellten bei nur einem Übergang und entsprechender Systemgenauigkeit zur Positionsaufdatung genügen. Aus Sicherheitsgründen kann eine gleichzeitige, parallel ablaufende Kombination von kurzen und langen Szenenstücken sinnvoll sein.

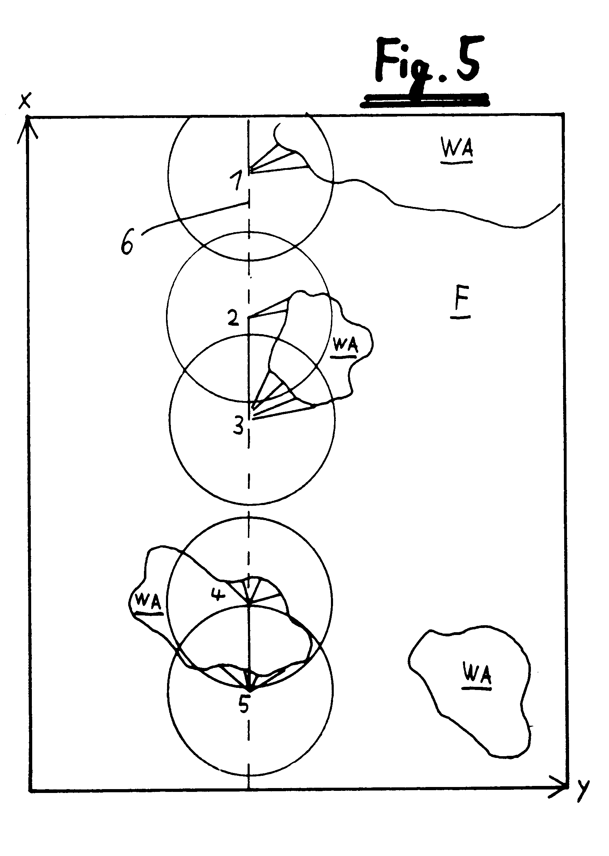

Figur 5 zeigt eine Variante des oben beschriebenen Verfahrens zur direkten Positionsbestimmung auf einer Karte, die der in Figur 4 gezeigten entspricht. Bei den Übergängen 1 bis 5 des Szenenstreifens (Meßprofils 6) werden der Abstand (Kreise) zu entsprechenden Referenzpunkten sowie die zugehörige Richtung festgestellt. Es empfiehlt sich, nur bestimmte diskrete Richtungen zuzulassen, um den Rechenaufwand gering zu halten. Sodann werden die Meßgrößen nach Richtungen geordnet und festgestellt, ob bei einer dieser Richtungen ein Häufungspunkt der Abstände vorliegt.

Ist dies der Fall, so erhält man aus Betrag und Richtung den Wert der Ablage. Durch Ausnutzung des Schätzfehlers der Positionsgenauigkeit läßt sich durch Einziehen der Genauigkeitsellipsen (≈ 3 σ) die Zahl der betrachteten Übergänge verringern und damit der Aufwand reduzieren. Auch bei diesem Verfahren gilt für die Anzahl der zum Vergleich benutzten Übergänge und damit verbundenen Streckenlänge das gleiche Prinzip wie bei den vorausgehenden Verfahren.

## Patentansprüche

1. Verfahren zur Navigation oder zur Navigationsaufdatung für Luftfahrzeuge, die einen Sensor (SN), eine Signalverarbeitungseinrichtung und einen Referenzspeicher (RSP) aufweisen, wobei der Sensor ein Höhenprofil des überflogenen Geländestreifens aufnimmt, daraus in der Signalverarbeitungseinrichtung die Übergänge zwischen Geländeabschnitten unterschiedlicher Textur ermittelt werden, ein die Abfolge der Übergänge repräsentierender Szenenstreifen erstellt und mit aus dem Referenzspeicher abgerufener Information verglichen wird, **dadurch gekennzeichnet**, daß
- die Übergänge je nach Art der beiderseits angrenzenden Geländeabschnitte mit einer speziellen Kennzeichnung versehen werden,
- zum Vergleich eine das überflogene Gelände mit den Geländeflächen unterschiedlicher Textur in zweidimensionaler Darstellung (Referenzgelände) repräsentierende Referenzinformation herangezogen wird,
- die erwartete Lage des Szenenstreifens in dem Referenzgelände bestimmt wird und
- die Positionsbestimmung durch Auswertung der Abstände zwischen den einzelnen gekennzeichneten Übergängen im Szenenstreifen einerseits sowie den diesen jeweils entsprechenden Übergängen im Referenzgelände andererseits erfolgt.

2. Verfahren nach Anspruch 1, **dadurch gekennzeichnet**, daß zur Positionsbestimmung der Szenenstreifen über dem Referenzgelände in zwei Dimensionen solange verschoben wird, bis ein Abstandsmaß zwischen einander entsprechenden Übergängen minimal wird.

3. Verfahren nach Anspruch 1, **dadurch gekennzeichnet**, daß zu jedem Übergang im Szenenstreifen in unterschiedlichen Richtungen entsprechende Übergänge im Referenzgelände gesucht werden und diejenige Richtung ausgewählt wird, in der sich gleiche Abstände häufen.

## Claims

1. Method of navigating or of navigational updating for aircraft which have a sensor (SN), a signal-processing device and a reference memory (RSP), in which the sensor senses a height profiled of the strip of ground flown over, the transitions between ground portions of different textures are determined therefrom in the signal-processing device, and a scene strip representing the sequence of the transitions is provided and is compared with data retrieved from the reference memory, characterized in that
- the transitions are provided with a particular identification according to the type of mutually adjacent portions of ground,
- for the comparison, reference information representing the ground flown over with the ground surfaces of different textures in a two-dimensional portrayal (reference ground) is used,
- the expected position of the scene strip in the reference ground is determined, and
- the position determination takes place by evaluation of the distances between the individual identification transitions in the scene strip, on the one hand, and the respective transitions corresponding thereto in the reference ground, on the other hand.

2. Method according to Claim 1, characterized in that, for the position determination, the scene strip is moved over the reference ground in two dimensions until a distance quantity between corresponding transitions is minimal.

3. Method according to Claim 1, characterized in that, for each transition in the scene strip, corresponding transitions are sought in different directions in the reference ground and that direction in which the same distances accumulate is selected.

## Revendications

1. Procédé de navigation ou de préparation des données de navigation pour des aéronefs équipes d'un détecteur (SN), d'un dispositif de traitement de signaux et d'une mémoire de référence (RSP), le détecteur enregistrant un profil altimétrique de la bande de terrain survolée, le dispositif de traitement de signaux déterminant à partir de celui-ci les transitions entre des sections de terrain de texture différente, une bande de séquences représentant la succession des transitions étant établie et comparée avec l'information appelée dans la mémoire de référence, **caractérisé en ce** en ce que :
- les transitions sont munies d'une identification spéciale selon le type des sections de terrain contiguës de part et d'autre,
- une information de référence représentant en deux dimensions le terrain survolé avec les surfaces de terrain de texture différente (terrain de référence) est utilisée à titre de comparaison,
- la position attendue de la bande de séquences est déterminée dans le terrain de référence, et
- la détermination de la position est effectuée par l'évaluation des distances entre les différentes transitions identifiées dans la bande de séquences d'une part et les transitions correspondantes dans le terrain de référence, d'autre part.

2. Procédé selon la revendication 1, caractérisé en ce que pour la détermination de la position, la bande de séquences est déplacée sur le terrain de référence en deux dimensions jusqu'à ce qu'une valeur de distance entre des transitions correspondantes soit minimale.

3. Procédé selon la revendication 1, caractérisé en ce que pour chaque transition dans la bande de séquences, on recherche dans différentes directions des transitions correspondantes dans le terrain de référence, et que l'on sélectionne la direction dans laquelle s'accumulent des intervalles identiques.
